# EUROPEAN PATENT SPECIFICATION

(11) **EP 3 507 012 B1**
(45) Date of publication and mention of the grant of the patent: **20.05.2020**
(21) Application number: 17771912.7
(22) Date of filing: 25.08.2017
(51) Int. Cl.: B01J 41/05, B01J 47/06, B01J 47/016, B01J 49/08, B01J 49/07, C08J 5/20, C08J 5/22, B01J 49/57, B01J 49/09

(54) **LOW-SODIUM RESIN**
NATRIUMARMES HARZ
RÉSINE À FAIBLE TENEUR EN SODIUM

(30) Priority: 30.08.2016 US 201662381215 P; 20.02.2017 US 201762460964 P
(43) Date of publication of application: 10.07.2019
(73) Proprietor: DDP Specialty Electronic Materials US 8, LLC, Wilmington, DE 19805 (US)
(72) Inventor: ROHANNA, John C., Collegeville, PA 19426 (US); SCHULTZ, Alfred K., Collegeville, PA 19426 (US)
(74) Representative: Houghton, Mark Phillip
(86) International application number: PCT/US2017/048542
(87) International publication number: WO 2018/044702

(56) References cited:
- US-A- 2 692 244
- US-A- 3 385 787
- US-A- 3 414 508

## Description

A useful class of products is resin beads that contain vinyl polymer that has quaternary ammonium groups. It is often desired to provide such resin beads in hydroxide form, i.e., a form in which 90 mole% or more of the quaternary ammonium groups are each associated with a hydroxide ion. However, in the course of developing the present invention, it has been observed that a collection of such resin beads in hydroxyl form normally contains more than 500 ppb of sodium, often more than 5000 ppb, by weight based on the weight of the collection of resin beads. For some possible uses of the resin beads, such an amount of sodium is undesirably high. Therefore it is desired to provide a method of producing of collection of resin beads in which the sodium level is 500 ppb by weight or less.

US 3,385,787 describes a process in which a mixture of cation exchange resin and anion exchange resin (normally having about 1% or more by weight of cation exchange resin) is regenerated as follows. According to US 3,385,787, in order to regenerate the anion exchange resin within the mixture, the mixture is contacted with caustic soda and then rinsed with water. Then, according to US 3,385,787, in order to transform the cation exchange resin in the mixture from the sodium form to the ammonium form, the mixture is contacted with an aqueous solution of ammonium hydroxide. US 2,692,244 describes a regeneration process of a strongly basic anion exchange resin with a caustic solution. US 3, 414,508 describes a regeneration process of an anion exchange resin and a cation exchange resin separated after being used in a mixed bed. It is desired to provide a method that is appropriate for removing sodium from a collection of anion exchange resin beads when the collection contains no cation exchange resin.

The following is a statement of the invention.

The present invention provides a method of removing sodium from a collection of sodium-laden resin beads comprising the steps of
(a) providing the collection of sodium-laden resin beads,
   wherein the resin beads comprise one or more vinyl polymers having quaternary ammonium groups;
   wherein no cation exchange resin is present in the collection of resin beads;
   wherein 90 mole % or more of the quaternary ammonium groups are each associated with a hydroxide anion;
   wherein sodium is present in an amount of more than 500 ppb by weight, based on the weight of the collection of sodium-laden resin beads, and
(b) bringing the collection of sodium-laden resin beads into contact with aqueous ammonium hydroxide to form a mixture (b).

The following is a detailed description of the invention.

As used herein, the following terms have the designated definitions, unless the context clearly indicates otherwise.

"Resin" as used herein is a synonym for "polymer." A "polymer," as used herein is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof. Polymers have weight-average molecular weight of 2,000 or more.

Molecules that can react with each other to form the repeat units of a polymer are known herein as "monomers." The repeat units so formed are known herein as "polymerized units" of the monomer.

Vinyl monomers have a non-aromatic carbon-carbon double bond that is capable of participating in a free-radical polymerization process. Vinyl monomers have molecular weight of less than 2,000. Vinyl monomers include, for example, styrene, substituted styrenes, dienes, ethylene, ethylene derivatives, and mixtures thereof. Ethylene derivatives include, for example, unsubstituted and substituted versions of the following: vinyl acetate and acrylic monomers. "Substituted" means having at least one attached chemical group such as, for example, alkyl group, alkenyl group, vinyl group, hydroxyl group, alkoxy group, hydroxyalkyl group, carboxylic acid group, sulfonic acid group, quaternary ammonium group, other functional groups, and combinations thereof.

As used herein, acrylic monomers include acrylic acid, methacrylic acid, esters thereof, amides thereof, acrylonitrile, and methacrylonitrile. Esters of acrylic acid and methacrylic acid include alkyl esters in which the alkyl group is substituted or unsubstituted. Amides of acrylic acid and methacrylic acid have the structure (III) 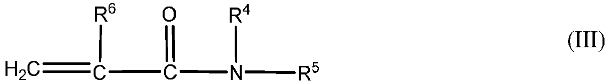 where R⁶ is hydrogen or methyl; where each of R⁴ and R⁵ is an organic group; where the N in structure (III) is bonded to a carbon atom in each of R⁴ and R⁵.

As used herein, vinyl aromatic monomers are vinyl monomers that contain one or more aromatic ring.

Vinyl monomers are considered to form polymers through a process of vinyl polymerization, in which the carbon-carbon double bonds react with each other to form a polymer chain.

A polymer in which 90% or more of the polymerized units, by weight based on the weight of the polymer, are polymerized units of one or more vinyl monomers is a vinyl polymer. A vinyl aromatic polymer is a polymer in which 50% or more of the polymerized units, by weight based on the weight of the polymer, are polymerized units of one or more vinyl aromatic monomer. A vinyl aromatic polymer that has been subjected to one or more chemical reactions to attach quaternary ammonium groups to the vinyl aromatic polymer is still considered herein to be a vinyl aromatic polymer. An acrylic polymer is a polymer in which 50% or more of the polymerized units, by weight based on the weight of the polymer, are polymerized units of one or more acrylic monomer. An acrylic polymer that has been subjected to one or more chemical reactions to attach quaternary ammonium groups to the acrylic polymer is still considered herein to be an acrylic polymer.

A resin is considered herein to be crosslinked if the polymer chain has sufficient branch points to render the polymer not soluble in any solvent. When it is said herein that a polymer is not soluble in a solvent, it means that less than 0.1 gram of the resin will dissolve in 100 grams of the solvent at 25°C.

An aqueous environment is a liquid that contains 75% or more water by weight based on the weight of the liquid.

An anion exchange resin is a polymer that has cationic groups covalently bound to the resin. A chemical group is cationic if there is a range of pH values that falls between 4 and 11 such that, when the group is present in an aqueous environment in that range of pH values, 50 mole% or more of the groups are in the cationic state. When the cationic group is in the cationic state and in contact with an aqueous environment, a process of anion exchange is possible, in which an anion adjacent to the cationic group switches places with an anion dissolved in the aqueous environment. Typical cationic groups on anion exchange resins are primary, secondary, and tertiary amine groups and quaternary ammonium groups.

A cation exchange resin is a polymer that has anionic groups covalently bound to the resin. A chemical group is anionic if there is a range of pH values that falls between 4 and 11 such that, when the group is present in an aqueous environment in that range of pH values, 50 mole% or more of the groups are in the anionic state. When the anionic group is in the anionic state and in contact with an aqueous environment, a process of cation exchange is possible, in which a cation adjacent to the anionic group switches places with cation dissolved in the aqueous environment. Typical anionic groups on cation exchange resins are sulfonate groups and carboxylate groups.

A quaternary ammonium group has the structure (I): 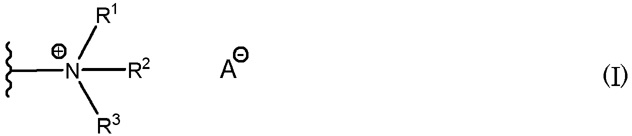 where 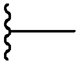 denotes the connection between the quaternary ammonium group and some other organic group, and A^{Θ} is an anion. Each of R¹, R², and R³ is an organic group that contains at least one carbon atom and at least one hydrogen atom. The nitrogen atom in structure (I) is bonded to a carbon atom in each of R¹, R², and R³.

A collection of resin beads is characterized by the diameters of the beads. If a bead is not spherical, the diameter of the bead is considered to be the diameter of a particle having the same volume as the bead. A collection of resin beads is characterized herein by the volume-average diameter of the collection.

The amount of sodium present in a collection of resin beads is measured by inductively coupled plasma mass spectrometry (ICP-MS). The abbreviation "ppb" is parts per billion, and "ppm" is parts per million. Unless stated otherwise, ppb and ppm are reported herein by weight.

The resin beads comprise one or more vinyl polymers. Preferred are vinyl aromatic polymers and acrylic polymers; more preferred are vinyl aromatic polymers.

Among vinyl aromatic polymers, preferred are those that comprise polymerized units of styrene, substituted styrenes, divinylbenzene, and combinations thereof. Preferably, the total amount of polymerized units of styrene, substituted styrenes, and divinylbenzene is, by weight based on the weight of the vinyl aromatic polymer, 75% or more; more preferably 85% or more; more preferably 95% or more; more preferably 99% or more.

The vinyl polymer has quaternary ammonium groups.

When the vinyl polymer is a vinyl aromatic polymer, preferably, quaternary ammonium groups are bonded to carbon atoms that are adjacent to an aromatic ring. Among vinyl aromatic polymers, preferably, the vinyl aromatic polymer has one or more polymerized units of structure (II): 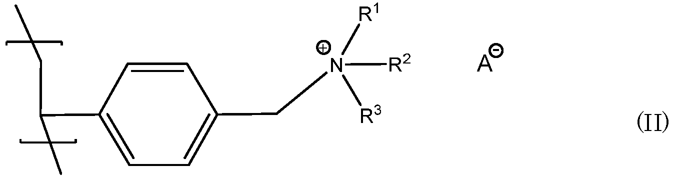 Where the polymerized unit is the structure between the brackets, and the lines extending through the brackets denote bonds between the polymerized unit and the adjacent polymerized units. In structure (II), the quaternary ammonium group is shown in the para position. Also contemplated are quaternary ammonium groups attached in the ortho or meta positions, and combinations thereof. R¹, R², R³, and A^{Θ} are defined as in structure (I). Preferably, each of R¹, R², and R³ is a substituted or unsubstituted alkyl group having 6 carbon atoms or fewer; more preferably 4 carbon atoms or fewer; more preferably 2 carbon atoms or fewer. Preferably, each of R¹, R², and R³ is an unsubstituted alkyl group. Preferably, R¹, R², and R³ are the same as each other.

Among acrylic polymers, preferred are those that comprise polymerized units of substituted or unsubstituted alkyl esters of acrylic acid, substituted or unsubstituted alkyl esters of methacrylic acid, unsubstituted or N-substituted amides of acrylic acid, unsubstituted or N-substituted amides of methacrylic acid, and combinations thereof. More preferred are those that comprise polymerized units of substituted or unsubstituted alkyl esters of acrylic acid, unsubstituted or N-substituted amides of acrylic acid, and combinations thereof. Preferably, the total amount of polymerized units of acrylic monomers is, by weight based on the weight of the acrylic polymer, 75% or more; more preferably 85% or more; more preferably 95% or more; more preferably 99% or more.

When the vinyl polymer is an acrylic polymer, preferably the acrylic polymer has one or more polymerized units of structure (IV): 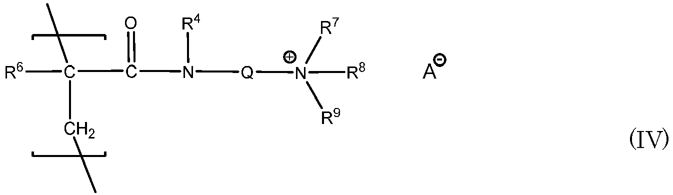 where R⁶ is hydrogen or methyl, preferably hydrogen; where R⁴ is hydrogen or methyl or ethyl, preferably hydrogen; where Q is an unsubstituted alkyl group having 1 to 8 carbon atoms, preferably ethyl or n-propyl; where each of R⁷, R⁸, and R⁹ is an organic group containing one or more carbon atom and one or more hydrogen atom; where a carbon atom within each of R⁷, R⁸, and R⁹ is bonded to the ammonium nitrogen atom in structure (IV). Preferred organic groups for R⁷, R⁸, and R⁹ are unsubstituted alkyl groups having 1 to 8 carbon atoms and hydroxyalkyl groups having 1 to 8 carbon atoms; more preferred are unsubstituted alkyl groups having 1 to 2 carbon atoms and hydroxyalkyl groups having 1 to 2 carbon atoms. Two preferred embodiments for structure (IV) are as follows: (1) each of R⁷, R⁸, and R⁹ is methyl; and (2) R⁷ and R⁸ are methyl, and R⁹ is 2-hydroxyethyl.

Preferably, the collection of resin beads having quaternary ammonium groups is useful as an anion exchange resin.

Vinyl polymer having quaternary ammonium groups may be made by any method. In a preferred method, a first step is performed in which a preliminary vinyl polymer is made by free-radical vinyl polymerization of monomers that include vinyl monomers. Then, this preliminary vinyl polymer is preferably subjected to one or more chemical reactions that result in the attachment of quaternary ammonium groups to the vinyl polymer.

When the vinyl polymer is a vinyl aromatic polymer, the preferred vinyl aromatic monomers for making the preliminary vinyl aromatic polymer are styrene and divinyl benzene. Preferably, the sum of the amount of polymerized units of styrene plus the amount of polymerized units of divinylbenzene, by weight based on the weight of the preliminary vinyl aromatic polymer, is 50% or more; more preferably 75% or more; more preferably 85% or more; more preferably 95% or more. Then, this preliminary vinyl aromatic polymer is preferably subjected to one or more chemical reactions that result in the attachment of quaternary ammonium groups to the polymer, preferably by forming structures as shown in structure (II).

When the vinyl polymer is acrylic polymer, the preferred acrylic monomers are unsubstituted alkyl esters of acrylic or methacrylic acid in which the alkyl group has 1 to 8 carbon atoms; more preferably 1 to 4 carbon atoms; more preferably 1 or 2 carbon atoms; more preferably 1 carbon atom. Alkyl esters of acrylic acid are preferred. Preferably, the sum of the amount of polymerized units of unsubstituted alkyl esters of acrylic or methacrylic acid, by weight based on the weight of the preliminary acrylic polymer, is 50% or more; more preferably 75% or more; more preferably 85% or more; more preferably 95% or more. Then, this preliminary acrylic polymer is preferably subjected to one or more chemical reactions that result in the attachment of quaternary ammonium groups to the polymer, preferably by forming structures as shown in structure (IV).

Preferably the amount of vinyl polymer in the resin beads is, by weight based on the weight of the resin beads, 50% or more; more preferably 75% or more; more preferably 85% or more; more preferably 95% or more; more preferably 99% or more.

Among the quaternary ammonium groups bonded to the vinyl polymer, the amount that have A^{Θ} that is OH^{Θ} is 90 mole % or more; preferably 95% or more; more preferably 99 mole% or more.

In the collection of resin beads of the present invention, there is no cation exchange resin.

The amount of sodium in the collection of resin beads refers to the amount of sodium in any form, including, for example, neutral elemental sodium, cationic sodium, sodium in a complex, other forms, and combinations thereof. The amount of sodium, by weight based on the weight of the collection of resin beads, is either zero or, if not zero, is NaMAX or less, where NaMAX is 500 ppb; more preferably 200 ppb; more preferably 100 ppb; more preferably 75 ppb; more preferably 50 ppb. Most preferably, no sodium is present.

Preferably, the collection of resin beads has volume-average diameter of 300 micrometer or more; more preferably 500 micrometer or more. Preferably, the collection of resin beads has volume-average diameter of 1500 micrometer or less; more preferably 1200 micrometer or less; more preferably 1000 micrometers or less.

The collection of resin beads may be made by any method. A preferred method (herein "method A") involves providing a collection of sodium-laden resin beads. The characteristics of the sodium-laden resin beads used in method A are the same as those described herein above for the collection of resin beads, except for the amount of sodium. In method A, the collection of sodium-laden resin beads is brought into contact with an aqueous solution of ammonium hydroxide.

While the present invention is not limited to any particular theory, it is contemplated that the sodium is present in the vinyl polymer with quaternary ammonium groups for the following reasons. In the usual process of making resin beads containing a vinyl polymer with quaternary ammonium groups, the process produces a resin in which 90 mole % or more of the polymerized units of structure (II) or (IV) have A^{Θ} that is Cl^{Θ}. However, the resin having chloride counter ion is not desirable commercially, and so the resin is brought into contact with one or more aqueous solutions, one or more of which is an aqueous solution of NaOH, in order to exchange Cl^{Θ} for OH^{Θ}. For example, the resin having chloride counter ion may be contacted with an aqueous solution of NaHCO₃ and then contacted with an aqueous solution of NaOH (as described, for example, in US 4,025,467). For another example, the resin having chloride counter ion may be contacted directly with an aqueous solution of NaOH. It is contemplated that the aqueous solution of NaOH contains some carbonate ion, CO₃^{2Θ}, and/or some of the anion (CO₃Na)^{Θ}. It is further contemplated that, while contact between the resin having chloride counter ion and the aqueous solution of NaOH will cause the vast majority of Cl^{Θ} counterions to be replaced with OH^{Θ}, a few of the Cl^{Θ} counterions will be replaced with (CO₃Na)^{Θ}. It is further contemplated that if this resin is subsequently brought into contact with an aqueous solution of ammonium hydroxide, some or all of the (CO₃Na)^{Θ} anions will become replaced with (CO₃NH₄)^{Θ} and/or OH^{Θ}, thus removing the sodium from the resin and putting the sodium into the aqueous solution. Thus the sodium will be removed when the aqueous solution is removed from the mixture of resin beads and aqueous solution.

In the sodium-laden resin beads of method A, the amount of sodium is, by weight based on the weight of the sodium-laden resin beads, over 500 ppb; more preferably 1000 ppb or higher; more preferably 2000 ppb or higher. In the sodium-laden resin beads of method A, the amount of sodium is preferably, by weight based on the weight of the sodium-laden resin beads, 100 ppm or lower; more preferably 50 ppm or lower.

Method A involves bringing the collection of sodium-laden resin beads into contact with an aqueous solution of ammonium hydroxide. Preferably, the concentration of ammonium hydroxide in the aqueous solution is 0.02 N or higher; more preferably 0.05 N or higher; more preferably 0.1 N or higher. Preferably, the concentration of ammonium hydroxide in the aqueous solution is 2 N or lower; more preferably 1 N or lower; more preferably 0.5 N or lower.

The collection of sodium-laden resin beads may be brought into contact with the aqueous solution of ammonium hydroxide by any method. Two useful types of methods are batch methods and flow methods. For any method, it is useful to characterize the method by the "A/R ratio", which is the ratio of the total mass (in grams) of ammonium hydroxide to the volume (in liters) of the collection of resin beads. The A/R ratio is reported as a single number, with units of grams of ammonium hydroxide per liter of resin beads.

In batch methods, an amount of sodium-laden resin beads and an amount of aqueous solution of ammonium hydroxide are placed into a container to form a mixture (b). Normally, some mechanical agitation is applied to this mixture (b). Then, mixture (b) is considered to contain a collection of resin beads that are no longer sodium-laden and to contain an aqueous solution that contains one or more dissolved species, and one or more of those dissolved species contains the sodium that had been removed from the resin beads. The sodium in the aqueous solution may be in any form, including for example, dissolved sodium cations, sodium as part of a complex, other forms, or combinations thereof.

In a batch method, after the formation and agitation of mixture (b), some or all of the resulting aqueous solution is separated from mixture (b). Any method of separation may be used, including, for example, decanting, filtering, centrifuging, other separation methods, and combinations thereof. Preferably, the amount of aqueous solution separated from mixture (b) is, by weight based on the original weight of the aqueous solution added to mixture (b), 50% or more; more preferably 75% or more.

For a batch method, the A/R ratio is found by dividing the grams of ammonium hydroxide present in the amount of aqueous solution that was placed in the container by the volume of the collection of sodium-laden resin beads that was placed in the container. The volume of the collection of resin beads is measured prior to forming mixture (b).

In flow methods, the sodium-laden resin beads are placed in a container, such as, for example, a chromatography column, that keeps the resin beads in place while an aqueous solution is introduced into the container. The aqueous solution passes through the collection of resin beads and then exits the container through an outlet, while the container keeps the resin beads within the container. While a portion of aqueous solution resides within the container in contact with resin beads, the aqueous solution inside the container and the beads within the container together are considered to form a mixture (b). Aqueous solution that exits the container after contact with the resin beads is considered to be "removed" from mixture (b). After a flow method has been operated for sufficient time, the resin beads in the container will no longer be sodium-laden. The sodium in the aqueous solution removed from mixture (b) may be in any form, including for example, dissolved sodium cations, sodium as part of a complex, other forms, or combinations thereof.

For a flow method, the A/R ratio is found by dividing the grams of ammonium hydroxide present in the total amount of aqueous solution that introduced into the container by the volume of the collection of sodium-laden resin beads that was placed in the container. The volume of the collection of resin beads is measured prior to placement in the container.

Preferably, the A/R ratio is, in grams of ammonium hydroxide per liter of resin beads, 0.5 or higher; more preferably 1 or higher; more preferably 2 or higher. Preferably, the A/R ratio is, in grams of ammonium hydroxide per liter of resin beads, 20 or lower; more preferably 10 or lower.

The following are examples of the present invention.

The resin beads used in the following examples are styrene/divinyl benzene copolymers that have attached quaternary ammonium groups. Volume-average bead diameter was between 300 and 1500 micrometer. The resin beads were in hydroxide form; that is, 90 mole % or more of the quaternary ammonium groups were each associated with a hydroxide ion.

Comparative Example 1C: washing the resin with water.

To a round-bottomed flask equipped with an overhead stirrer was added 125 mL of the resin beads followed by 77.65 mL of deionized water. The resulting mixture was agitated for 30 minutes, after which the agitation was stopped, and the aqueous solution was decanted. A 10 mL sample of the resin was removed for sodium analysis by ICP-MS.

Example 2: washing the resin with aqueous solution of ammonium hydroxide.

To a round-bottomed flask equipped with an overhead stirrer was added 125 mL of the resin beads followed by 77.65 mL of deionized water and 2.22 mL of a 28% by weight solution of ammonium hydroxide in water. The resulting mixture was agitated for 30 minutes, after which the agitation was stopped, and the aqueous solution was decanted. A 10 mL sample of the resin was removed for sodium analysis by ICP-MS.

Example 3: Results of ICP-MS testing.

| Sample | Sodium concentration |
|---|---|
| Comparative 1C | 559 ppb by weight |
| Example 2 | 27 ppb by weight |

Example 2 had far lower concentration of sodium.

## Claims

1. A method of removing sodium from a collection of sodium-laden resin beads comprising the steps of
(a) providing the collection of sodium-laden resin beads,
wherein the resin beads comprise one or more vinyl polymers having quaternary ammonium groups;
wherein no cation exchange resin is present in the collection of resin beads;
wherein 90 mole % or more of the quaternary ammonium groups are each associated with a hydroxide anion;
wherein sodium is present in an amount of more than 500 ppb by weight, based on the weight of the collection of sodium-laden resin beads, and
(b) bringing the collection of sodium-laden resin beads into contact with aqueous ammonium hydroxide to form a mixture (b).

2. The method of claim 1, comprising the step, subsequent to step (b), of separating water and compounds dissolved in the water from the mixture (b).

## Patentansprüche

1. Verfahren zum Entfernen von Natrium aus einer Sammlung von natriumhaltigen Harzperlen, umfassend die folgenden Schritte:
(a) Bereitstellen der Sammlung von natriumhaltigen Harzperlen,
wobei die Harzperlen ein oder mehrere Vinylpolymere umfassen, die quaternäre Ammoniumgruppen aufweisen;
wobei kein Kationenaustauschharz in der Sammlung von Harzperlen vorhanden ist;
wobei 90 Mol-% oder mehr der quaternären Ammoniumgruppen jeweils mit einem Hydroxidanion verbunden sind;
wobei Natrium in einer Menge von mehr als 500 ppb, auf das Gewicht bezogen, vorhanden ist, basierend auf dem Gewicht der Sammlung von natriumhaltigen Harzperlen, und
(b) in Kontakt bringen der Sammlung von natriumhaltigen Harzperlen mit wässrigem Ammoniumhydroxid, um eine Mischung (b) zu bilden.

2. Verfahren nach Anspruch 1, umfassend den Schritt, anschließend an Schritt (b), des Trennens von Wasser und Verbindungen, die im Wasser aus der Mischung (b) aufgelöst sind.

## Revendications

1. Procédé d'élimination du sodium d'une collection de perles de résine chargées de sodium comprenant les étapes suivantes :
a) fournir la collection de perles de résine chargées de sodium,
dans lequel les perles de résine comprennent un ou plusieurs polymères vinyliques ayant des groupes ammonium quaternaire;
où aucune résine échangeuse de cations n'est présente dans la collection de perles de résine;
où 90% en moles ou plus des groupes ammonium quaternaire sont chacun associés à un anion hydroxyde;
où le sodium est présent en une quantité de plus de 500 ppb en poids, sur la base du poids de la collection de perles de résine chargées de sodium, et
(b) mettre en contact de la collection de perles de résine chargées de sodium avec de l'hydroxyde d'ammonium aqueux pour former un mélange (b).

2. Procédé selon la revendication 1, comprenant l'étape, postérieure à l'étape (b), de séparation de l'eau et des composés dissous dans l'eau du mélange (b).
